# FASCICULE DE BREVET EUROPEEN

(11) **EP 3 529 846 B1**
(45) Date de publication et mention de la délivrance du brevet: **29.07.2020**
(21) Numéro de dépôt: 17778270.3
(22) Date de dépôt: 03.10.2017
(51) Int. Cl.: H01M 8/18, H01M 8/24

(54) **BATTERIE A FLUX REDOX COMPORTANT UN SYSTEME DE REDUCTION DES COURANTS DE DERIVATION**
REDOX-FLUSSBATTERIE MIT EINEM SYSTEM ZUR VERMINDERUNG VON BYPASS-STRÖMEN
REDOX FLOW BATTERY INCLUDING A SYSTEM FOR DECREASING BY-PASS CURRENTS

(30) Priorité: 19.10.2016 FR 1660109
(43) Date de publication de la demande: 28.08.2019
(73) Titulaire: IFP Energies nouvelles, 92852 Rueil-Malmaison (FR)
(72) Inventeur: MINGANT, Remy, 38200 Vienne (FR); BUREAU DU COLOMBIER, Gérard, 69300 Caluire et Cuire (FR)
(86) Numéro de dépôt international: PCT/EP2017/075062
(87) Numéro de publication internationale: WO 2018/072991

(56) Documents cités:
- WO-A1-2007/131250
- WO-A2-2012/078786
- KR-B1- 101 357 822
- US-A1- 2014 057 141

## Description

### Domaine de l'invention

La présente invention concerne le domaine des systèmes de stockage et de restitution d'énergie électrochimique à flux redox, en particulier la réduction ou l'élimination des courants de dérivation dans de telles batteries.

### Contexte général

Les batteries à flux redox (« redox flow » en anglais), aussi appelées batteries à circulation, sont des batteries rechargeables dans lesquelles des réactifs sous forme liquide, un oxydant et un réducteur, sont mis en circulation à partir de deux réservoirs de stockage et réagissent dans une cellule comprenant deux électrodes séparées par une membrane perméable aux ions. Les réactifs sous forme liquide sont des composés redox, qui sont réduits au niveau de l'électrode positive de la cellule et qui sont oxydés au niveau de l'électrode négative lorsque le système se décharge. La batterie fonctionne alors comme un générateur. Classiquement, il est fait référence au catholyte pour désigner un électrolyte contenant des ions redox spécifiques qui sont dans un état oxydé et subissent une réduction au niveau de l'électrode positive (cathode) lors de la décharge de la batterie, et il est fait référence à l'anolyte pour désigner l'électrolyte contenant des ions redox spécifiques qui sont dans un état réduit et subissent une oxydation au niveau de l'électrode négative (anode) lors de la décharge de la batterie. Ces réactions redox s'inversent lors de la charge de la batterie, le système fonctionnant alors comme un électrolyseur. Les batteries à flux redox rejoignent en cela la définition d'un accumulateur, qui est un générateur électrochimique rechargeable, c'est-à-dire un système qui convertit l'énergie chimique contenue dans les matières actives qui le composent directement en énergie électrique par l'intermédiaire de réactions d'oxydoréduction (réactions redox), et dans lequel les réactions redox sont réversibles, par exemple en branchant une alimentation électrique à ses bornes créant un courant inverse au sens de la décharge.

On note que dans les batteries à flux redox classiques, les catholyte et anolyte sont des solutions actives dans lesquelles les réactions redox ont lieu à l'état liquide avec des couples redox solubles, contrairement à ce qu'on entend par électrolyte dans une batterie classique (accumulateur réversible ou « secondary battery » en anglais), qui est une solution servant simplement de média de transport des charges sous forme ionique entre les deux électrodes pour assurer l'électroneutralité globale du système, mais qui ne stocke pas l'énergie.

Les travaux sur les batteries à flux redox ont réellement débuté dans les années 70, avec notamment l'apparition du système zinc/chlore. Les batteries à flux redox les plus largement connues à l'heure actuelle sont les batteries redox à Vanadium, VRB, pour « Vanadium Redox Battery » en anglais, qui est un système commercialisé, et les batteries à flux redox Zinc/Brome (Zn/Br), qui ont la particularité d'avoir un des réactifs sous forme solide déposé à une électrode.

Les batteries à flux redox présentent l'avantage considérable de pouvoir présenter une capacité de charge/décharge qui peut être très importante, car elle est fonction de la taille des réservoirs de catholyte et d'anolyte employés. En outre, la séparation électrolytes / cellule électrochimique permet un découplage entre la puissance disponible, liée au dimensionnement de la cellule électrochimique, et la capacité énergétique du système, liée à la taille des réservoirs d'électrolytes.

Les batteries à flux redox peuvent être utilisées dans des applications de stockage stationnaire de l'énergie électrique, par exemple les systèmes photovoltaïques ou les systèmes éoliens générateurs d'électricité présentant un besoin de stockage et de restitution de l'énergie lié à l'intermittence de la production d'énergie. Les batteries à flux redox constituent également une option intéressante pour d'autres applications de stockage stationnaire telles que le stockage du surplus d'énergie électrique dans les centrales thermiques et nucléaires.

Dans les applications stationnaires, de forts niveaux de tensions et des capacités élevées sont généralement requis, et les batteries à flux redox sont alors classiquement formées d'une pluralité de cellules connectées électriquement en série, avec un électrolyte qui passe dans chacune des cellules par un chemin parallèle.

Dans cette configuration de cellules connectées en série et reliées fluidiquement en parallèle, l'un des problèmes majeurs rencontrés est l'apparition de courants de dérivation, également appelés courants parallèles, et plus connus sous le nom de courants de « shunt » d'après la terminologie anglo-saxonne, qui sont des courants néfastes au bon fonctionnement de la batterie à flux redox. En particulier, les courants de dérivation constituent l'un des principaux facteurs qui affecte les performances des batteries à flux redox, en diminuant la durée de vie de la batterie en cyclage, ainsi que le rendement énergétique de la batterie.

En effet, les courants de dérivation sont une forme de court-circuit causé par le trajet conducteur de l'électricité formé dans l'électrolyte en dérivation sur les cellules, résultant en une consommation d'énergie disponible de décharge ou de l'énergie de charge délivrée. Ces pertes par courants de dérivation, pouvant survenir lors de la charge, de la décharge, et même en circuit ouvert, ont des effets secondaires indésirables, tels que la corrosion des électrodes et/ou d'autres composants, une sollicitation inutile des réactifs, des pertes thermiques excessives, conduisant à la perte d'énergie utilisable et au raccourcissement de la durée de vie utile de la batterie.

Il est ainsi souhaitable de limiter les courants de dérivation pour réduire au minimum ces impacts négatifs.

Divers systèmes connus proposent de réduire ces courants de dérivation dans les batteries à flux redox.

Des techniques connues de réduction des courants de dérivation consistent à allonger le passage de l'électrolyte, par exemple au sein même de la cellule électrochimique, tel que décrit dans la demande de brevet WO 2014/035020 A1, ou en amont et en aval de la cellule électrochimique, tel que décrit dans la demande de brevet WO 2014/145844 A1. De telles techniques reposant sur une augmentation la longueur de la tubulure de circulation de l'électrolyte ont pour principal inconvénient une réduction de la section transversale de passage de l'électrolyte, qui entraine une perte de charge et une augmentation de la résistance à l'écoulement de l'électrolyte ayant des répercussions sur le pompage, pénalisant au final l'efficacité énergétique de la batterie à flux redox.

La demande de brevet US 2012/0308856 A1 divulgue une batterie à flux redox comportant des dispositifs de résistance actifs aux courants de dérivation disposés sur le chemin fluidique à l'entrée et à la sortie des cellules. Divers dispositifs sont proposés, tels que des composants comprenant une entrée et une sortie en fluide, et une partie mécanique constituée de billes solides, permettant de rendre le débit de fluide non seulement intermittent, mais également déconnecté mécaniquement de tout contact électrolytique entre l'entrée et la sortie.

On connaît également un système, tel que décrit dans la demande de brevet WO 2007/131250 A1, dans lequel les courants de dérivation sont réduits par le passage de l'électrolyte à travers une autre phase liquide électriquement non conductrice, de densité différente de celle de l'électrolyte et non miscible avec celui-ci.

La demande de brevet JP 2003100337 A divulgue également un système dans lequel l'électrolyte arrive au niveau des cellules de manière intermittente, réduisant ainsi les courants de dérivation en coupant les liens électrolytiques entre les cellules.

La demande de brevet KR 101357822 propose un autre système de réduction des courants de dérivation dans lequel une alimentation intermittente des cellules en électrolyte est réalisée, le système comportant des vannes à l'entrée des cellules. Le système peut en outre comprendre des moyens pour former des bulles de gaz dans l'électrolyte entrant dans les cellules. Un tel système, en plus de comprendre un pilotage complexe de la circulation de l'électrolyte impliquant des vannes et leur contrôle, a pour inconvénient d'entrainer une perte de puissance due à une diminution de la surface de contact entre l'électrode et l'électrolyte qui contient des bulles de gaz. Des problèmes d'instabilité de puissance et de bruit électrochimique peuvent également se produire dans de telles batteries.

### Objectifs et résumé de l'invention

La présente invention a pour objectif de surmonter au moins en partie les inconvénients de l'art antérieur mentionné, et vise de manière générale à réduire voire supprimer les courants de dérivation dans les batteries à flux redox.

En particulier, la présente invention vise à fournir une batterie à flux redox comportant un système pour réduire, voire supprimer, les courants de dérivation, qui soit simple du point de vue structurel, et qui n'affecte pas significativement la puissance de la batterie.

Ainsi, pour atteindre au moins l'un des objectifs susvisés, parmi d'autres, la présente invention propose, selon un premier aspect, un système de stockage et de restitution d'énergie électrochimique à flux redox, comportant
- *n* cellules électrochimiques connectées électriquement en série, n étant un entier supérieur ou égal à 2, chaque cellule comportant une enceinte formée par un compartiment cathodique contenant un catholyte et un compartiment anodique contenant un anolyte, les compartiments cathodique et anodique étant séparés par un séparateur isolant électrique et perméable aux ions contenus dans le catholyte et l'anolyte, et les compartiments cathodique et anodique comportant chacun un conduit d'entrée et un conduit de sortie pour la circulation respectivement du catholyte et de l'anolyte dans les compartiments ;
- un premier réservoir de stockage pour le catholyte ;
- un deuxième réservoir de stockage pour l'anolyte ;
- des moyens de communication fluidique entre le premier réservoir et le compartiment cathodique de chaque cellule électrochimique et entre le deuxième réservoir et le compartiment anodique de chaque cellule électrochimique, tels que les cellules électrochimiques sont reliées fluidiquement en parallèle ;
- un système de réduction de courants de dérivation comportant :
   -- des moyens d'injection d'un gaz dans les conduits d'entrée et de sortie des compartiments cathodique et anodique de *(n-1)* cellules électrochimiques pour former des bulles de gaz dans les conduits d'entrée et de sortie ;
   -- un dispositif de retrait des bulles de gaz disposé sur les conduits d'entrée des compartiments cathodique et anodique des *(n-1)* cellules électrochimiques, le dispositif étant positionné en aval des moyens d'injection du gaz et en amont des compartiments cathodiques et anodiques.

Avantageusement, le gaz est inerte, et est de préférence du diazote.

De préférence, les bulles de gaz ont leur dimension la plus grande qui est supérieure ou égale à 1,5 fois le diamètre des conduits d'entrée et de sortie des compartiments cathodiques et anodiques des *(n-1)* cellules électrochimiques.

Selon un mode de réalisation, les moyens d'injection du gaz comprennent, pour chaque conduit d'entrée et conduit de sortie des compartiments cathodiques et anodiques des (n-1) cellules électrochimiques, un tuyau d'arrivée du gaz connecté à un réservoir du gaz, le tuyau débouchant dans le conduit d'entrée ou conduit de sortie des compartiments cathodiques et anodiques.

Selon un mode de réalisation, les moyens d'injection du gaz comprennent au moins un ventilateur ou un compresseur de gaz relié au réservoir du gaz pour le maintenir sous pression.

Les moyens d'injection du gaz peuvent comporter au moins une vanne positionnée sur le tuyau d'arrivée du gaz, en aval du réservoir de gaz.

Alternativement le tuyau d'arrivée du gaz a une section de passage telle que le gaz est injecté dans les conduits d'entrée ou conduit de sortie des compartiments cathodiques et anodiques par effet de Venturi.

Selon un mode de réalisation, le dispositif de retrait des bulles de gaz comporte une enceinte hermétique comprenant :
- une phase liquide dans une partie inférieure de l'enceinte, la phase liquide comportant de l'anolyte ou du catholyte ;
- une phase gazeuse dans une partie supérieure de l'enceinte, la phase gazeuse comportant du gaz de même nature que le gaz injecté pour former les bulles ;
- une sortie pour le gaz, de préférence une soupape, positionnée au sommet de la partie supérieure de l'enceinte ;
une première portion du conduit d'entrée dans laquelle circule le catholyte ou l'anolyte additionné du gaz s'ouvrant dans la partie supérieure de l'enceinte, et
une seconde portion du conduit d'entrée dans laquelle circule le catholyte ou l'anolyte ôté du gaz s'ouvrant dans la partie inférieure de l'enceinte,
la première portion du conduit d'entrée étant située en aval des moyens d'injection du gaz dans les conduits d'entrée des compartiments cathodique ou anodique des *(n-1)* cellules électrochimiques et la deuxième portion du conduit d'entrée étant située en aval du dispositif de retrait du gaz et en amont des compartiments cathodique ou anodique des *(n-1)* cellules électrochimiques.

Selon un mode de réalisation, les moyens d'injection d'un gaz comportent un circuit de recyclage du gaz retiré par le dispositif de retrait des bulles de gaz dans les conduites de sortie des compartiments cathodique ou anodique des *(n-1)* cellules électrochimiques.

Selon un mode de réalisation, les moyens de communication fluidique comportent :
- une première conduite principale d'entrée et une première conduite principale de sortie reliant le premier réservoir aux compartiments cathodiques des *n* cellules électrochimiques, la première conduite principale d'entrée étant configurée de manière à distribuer le catholyte dans les conduits d'entrée des compartiments cathodiques au moyen d'une première pompe et la première conduite principale de sortie étant configurée de manière à collecter le catholyte issu des conduits de sortie des compartiments cathodiques ;
- une deuxième conduite principale d'entrée et une deuxième conduite principale de sortie reliant le deuxième réservoir aux compartiments anodiques des *n* cellules électrochimiques, la deuxième conduite principale d'entrée étant configurée de manière à distribuer l'anolyte dans les conduits d'entrée des compartiments anodiques au moyen d'une deuxième pompe et la deuxième conduite principale de sortie étant configurée de manière à collecter l'anolyte issu des conduits de sortie des compartiments anodiques des *n* cellules électrochimiques.

Selon un mode de réalisation, les conduits d'entrée et de sortie des compartiments cathodique et anodique des *n* cellules électrochimiques, et les premières et deuxièmes conduites principales d'entrée et de sortie sont isolants électriquement.

Les conduits d'entrée et de sortie des compartiments cathodique et anodique des *n* cellules électrochimiques, et les premières et deuxièmes conduites principales d'entrée et de sortie, peuvent être constitués d'un ou plusieurs matériaux isolants électriquement, de préférence choisis parmi les polymères thermoplastiques isolants électriques, de préférence choisis dans la liste constituée par le PVC, le polyéthylène, le polypropylène.

Alternativement, les conduits d'entrée et de sortie des compartiments cathodiques et anodiques des n cellules électrochimiques, et les premières et deuxièmes conduites principales d'entrée et de sortie, peuvent comporter un corps constitué d'un ou plusieurs matériaux conducteurs électriquement, et comporter un revêtement interne destiné à être en contact avec le catholyte ou l'anolyte, isolant électriquement, le revêtement interne étant de préférence constitué d'un matériau isolant électriquement choisi parmi les polymères fluorés isolants électriques, plus préférentiellement choisi dans la liste constituée par le PTFE et le PFA.

La présente invention propose, selon un deuxième aspect, un procédé de réduction des courants de dérivation dans un système de stockage et de restitution d'énergie électrochimique à flux redox selon l'invention, comportant les étapes suivantes :
- on envoie un catholyte et un anolyte dans respectivement des compartiments cathodiques et anodiques de *n* cellules électrochimiques connectées électriquement en série, n étant un entier supérieur ou égal à 2, et reliées fluidiquement en parallèle, par pompage des catholyte et anolyte depuis respectivement un premier réservoir et un deuxième réservoir ;
- on injecte du gaz dans des conduits d'entrée du catholyte et de l'anolyte des compartiments cathodique et anodique de *(n-1)* cellules électrochimiques pour former des bulles de gaz dans les conduits d'entrée ;
- on retire les bulles de gaz du catholyte et de l'anolyte avant leur entrée dans les compartiments cathodique et anodique des *(n-1)* cellules électrochimiques ;
- on injecte du gaz dans des conduits de sortie du catholyte et de l'anolyte des compartiments cathodique et anodique de *(n-1)* cellules électrochimiques pour former des bulles de gaz dans les conduits de sortie ;
- on renvoie le catholyte et l'anolyte contenant des bulles de gaz respectivement dans premier réservoir et le deuxième réservoir, le gaz étant séparé du catholyte et de l'anolyte au sein des premier et deuxième réservoirs.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1 est une vue schématique en coupe transversale d'une batterie à flux redox selon l'art antérieur.
La figure 2 est une vue schématique en coupe transversale d'une batterie à flux redox selon un premier mode de réalisation de l'invention.
La figure 3 est un schéma selon une coupe transversale des moyens d'injection de gaz pour former des bulles de gaz dans une batterie à flux redox selon l'invention.
La figure 4 est un schéma selon une coupe transversale du dispositif de retrait des bulles de gaz dans une batterie à flux redox selon l'invention.
La figure 5 est une vue schématique en coupe transversale d'une batterie à flux redox selon un deuxième mode de réalisation de l'invention.

Sur les figures, les mêmes références désignent des éléments identiques ou analogues.

### Description de l'invention

L'objet de l'invention est de proposer un système de stockage et de restitution d'énergie électrochimique à flux redox comportant un système de réduction de courants de dérivation.

Dans la présente description, on utilisera également l'expression « batterie à flux redox » pour désigner un tel système de stockage et de restitution d'énergie électrochimique à flux redox.

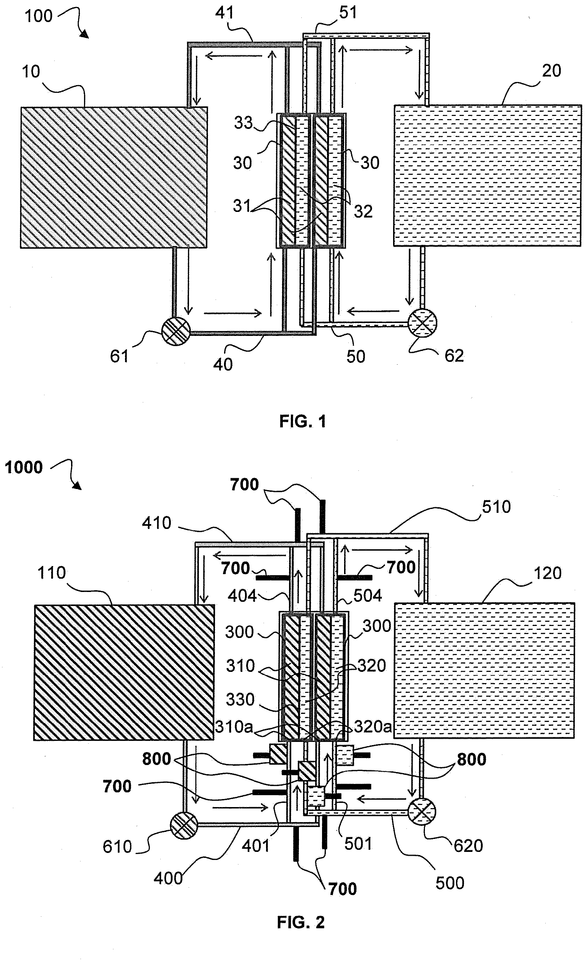

Classiquement, une batterie à flux redox 100, tel que représentée à la figure 1, comporte une pluralité de cellules électrochimiques 30 empilées et connectées électriquement, au moins en partie, en série. Comme dans le cas des batteries d'accumulateurs, les cellules montées en série permettent d'obtenir des tensions élevées, ce qui permet de fournir une puissance adaptée à l'application visée. Deux telles cellules sont représentées à la figure 1.

Chaque cellule 30 comporte une enceinte formée par un compartiment cathodique 31 contenant un catholyte et un compartiment anodique 32 contenant un anolyte. Les compartiments cathodique 31 et anodique 32 sont séparés par un séparateur 33 isolant électrique et perméable aux ions contenus dans le catholyte et l'anolyte.

Les compartiments cathodique 31 et anodique 32 sont définis chacun entre le séparateur 33 et un collecteur de courant dédié à chaque compartiment (non représenté). Les collecteurs de courant sont par exemple des plaques métalliques ou des plaques formés de carbone, qui ne subissent pas elles-mêmes d'activité redox.

Chaque compartiment cathodique 31 et anodique 32 comporte à une extrémité une entrée pour recevoir un flux d'électrolyte (catholyte ou anolyte selon le compartiment) et à l'autre extrémité une sortie pour évacuer le flux d'électrolyte.

Les cellules 30 sont reliées fluidiquement en parallèle : le catholyte circule entre un réservoir de catholyte 10 et les compartiments cathodiques 31 des cellules 30, une distribution parallèle du catholyte étant réalisée en dérivation d'un conduit d'arrivée principal 40 du catholyte. Les compartiments cathodiques sont ainsi alimentés par un réseau de conduits parallèles rattachés au conduit d'arrivée principal 40. Le catholyte sort des compartiments cathodiques des cellules selon d'autres conduits parallèles qui rejoignent un conduit de sortie principal 41 retournant le catholyte vers le réservoir 10. Le schéma est identique pour l'anolyte qui circule entre un réservoir d'anolyte 20 et les compartiments anodiques 32 des cellules 30, et qui est distribué depuis un conduit d'arrivée principal 50 alimentant en parallèle l'entrée des compartiments anodiques, et qui est récupéré à la sortie des compartiments anodiques par un conduit de sortie principal 51 relié au deuxième réservoir 20.

Les réservoirs 10 et 20 sont ainsi communs aux différentes cellules 30.

Le sens de circulation des électrolytes est représenté par les flèches.

Dans la batterie représentée, une seule pompe (61, 62) est utilisée par type d'électrolyte pour mettre en circulation l'électrolyte du réservoir (10, 20) vers les cellules 30.

La distribution du liquide dans les cellules est réalisée de manière à ce que les pertes de charges soient identiques à chaque branche (chaque conduit parallèle), et que les flux soient identiques.

Par compartiment anodique, on entend la zone réactionnelle où a lieu une réaction électrochimique d'oxydation (émission d'électrons), par opposition au compartiment cathodique qui est la zone réactionnelle où a lieu une réaction électrochimique de réduction (absorption d'électrons).

Le compartiment anodique contient l'électrode négative ou anode, et le compartiment cathodique contient l'électrode positive ou cathode.

Dans une batterie à flux redox, qui est un accumulateur, ces rôles s'inversent selon que le système se décharge ou se charge car les réactions redox sont réversibles. Ainsi, le compartiment anodique où se produit une réaction d'oxydation permettant l'émission d'électrons lorsque le système débite (se décharge), devient le lieu d'une réaction de réduction si un courant est appliqué au système afin de le recharger.

Par conséquent, les expressions compartiments anodique et cathodique sont définies dans la présente description en prenant comme référence l'état de fonctionnement en décharge du système.

Le catholyte désigne un électrolyte contenant des ions redox spécifiques qui sont dans un état oxydé et subissent une réduction au niveau de l'électrode positive (cathode) lors de la décharge de la batterie. L'anolyte désigne un électrolyte contenant des ions redox spécifiques qui sont dans un état réduit et subissent une oxydation au niveau de l'électrode négative (anode) lors de la décharge de la batterie.

Sur la figure 1, le système est représenté comme fonctionnant dans le sens d'une décharge. Les électrons libérés à l'anode d'une cellule sont collectés par le collecteur de courant de l'anode et circulent via un circuit électrique extérieur relié au collecteur de courant de la cathode de la cellule.

Dans une batterie à flux redox classique, des courants de dérivation néfastes pour la batterie sont créés, comme déjà expliqué plus haut dans la description.

Dans la batterie à flux redox 100, le flux continu de l'électrolyte liquide crée un trajet conducteur de l'électricité. Une différence de potentiel se crée dans l'électrolyte entre l'entrée et la sortie de la cellule 30, du fait des réactions électrochimiques se produisant dans la cellule 30. Un courant de dérivation peut alors être crée dans le catholyte entre les deux branches des conduits 40 et 41, qui relient fluidiquement en parallèle les compartiments cathodiques des cellules au réservoir 10. De même, un courant de dérivation peut se créer entre les deux branches des conduits 50 et 51, qui relient fluidiquement en parallèle les compartiments anodiques des cellules au réservoir 20.

La présente invention propose une batterie à flux redox comportant un système de réduction de courants de dérivation.

La figure 2 représente un système de stockage et de restitution d'énergie électrochimique à flux redox 1000 selon un premier mode de réalisation de l'invention.

Le système est représenté comme fonctionnant dans le sens d'une décharge et le sens de circulation des électrolytes est illustré par des flèches, comme pour la batterie classique de la figure 1.

La batterie 1000 comporte n cellules électrochimiques connectées électriquement en série, n étant un entier supérieur ou égal à 2. Typiquement, une telle batterie comporte entre 2 et 60 cellules, pouvant former un module. Si la tension requise est plus importante, plusieurs modules de cellules peuvent être montés en série. Par exemple une batterie selon l'invention peut comporter 20 cellules connectées électriquement en série, fournissant par exemple une tension de 24 V.

Sur la figure 2, deux cellules 300 sont connectées électriquement, au moins en partie, en série.

La structure des cellules électrochimiques et le fonctionnement général de la batterie est identique à ce qui a été décrit en relation avec la figure 1 : chaque cellule 300 comporte une enceinte formée par un compartiment cathodique 310 contenant le catholyte et un compartiment anodique 320 contenant l'anolyte. Les compartiments cathodique et anodique sont séparés par un séparateur 330 isolant électrique et perméable aux ions contenus dans le catholyte et l'anolyte. Les compartiments cathodique 310 et anodique 320 comportent chacun un conduit d'entrée (401, 501) et un conduit de sortie (404, 504) pour la circulation respectivement du catholyte et de l'anolyte dans les compartiments.

La batterie 1000 comporte également un premier réservoir 110 de stockage pour le catholyte et un deuxième réservoir 120 de stockage pour l'anolyte.

De préférence, une pompe 610 permet la circulation du catholyte entre le réservoir 110 et les compartiments cathodiques 310 des cellules 300, et une pompe 620 permet la circulation de l'anolyte entre le réservoir 120 et les compartiments anodiques 320 des cellules 300.

La circulation des électrolytes est réalisée par des moyens de communication fluidique entre le premier réservoir 110 et le compartiment cathodique 310 de chaque cellule 300 et entre le deuxième réservoir 120 et le compartiment anodique 320 de chaque cellule 300 tel que les cellules électrochimiques sont reliées fluidiquement en parallèle.

Plus particulièrement, les moyens de communication fluidique comportent une première conduite principale d'entrée 400 et une première conduite principale de sortie 410 reliant le premier réservoir 110 aux compartiments cathodiques 310 des cellules électrochimiques 300, ainsi qu'une deuxième conduite principale d'entrée 500 et une deuxième conduite principale de sortie 510 reliant le deuxième réservoir 120 aux compartiments anodiques 320 des cellules 300.

La première conduite principale d'entrée 400 est configurée de manière à distribuer le catholyte dans les conduits d'entrée 401 des compartiments cathodiques 310 au moyen de la première pompe 610 et la première conduite principale de sortie 410 est configurée de manière à collecter le catholyte issu des conduits de sortie 404 des compartiments cathodiques 310. De même, la deuxième conduite principale d'entrée 500 est configurée de manière à distribuer l'anolyte dans les conduits d'entrée 501 des compartiments anodiques 320 au moyen de la deuxième pompe 620 et la deuxième conduite principale de sortie 510 est configurée de manière à collecter l'anolyte issu des conduits de sortie 504 des compartiments anodiques 320.

De préférence, les conduits d'entrée 401 et de sortie 501 des compartiments cathodiques 310 et anodiques 320 des cellules électrochimiques 300 sont isolants électriquement. De même pour la première conduite principale d'entrée 400 la deuxième conduite principale d'entrée 500, ainsi que pour la première conduite principale de sortie 410 et la deuxième conduite principale de sortie 510, qui sont isolantes électriquement.

Avantageusement, les conduits d'entrée 401 et de sortie 501 des compartiments cathodique 310 et anodiques 320 des cellules, et les premières et deuxièmes conduites principales d'entrée et de sortie (400, 500, 410, 510), sont constitués d'un ou plusieurs matériaux isolants électriquement, de préférence choisis parmi les polymères thermoplastiques tels que le poly(chlorure de vinyle) (PVC), le polyéthylène (PE), le polypropylène (PP), et plus préférentiellement choisis dans la liste constituée par le PVC, le PE, le PP.

Alternativement, les conduits d'entrée 401 et de sortie 501 des compartiments cathodique 310 et anodiques 320 des cellules, et les premières et deuxièmes conduites principales d'entrée et de sortie (400, 500, 410, 510), comportent :
- un corps constitué d'un ou plusieurs matériaux conducteurs électriquement ;
- un revêtement interne destiné à être en contact avec le catholyte ou l'anolyte, isolant électriquement. Le revêtement interne peut être constitué d'un matériau isolant électriquement, tel qu'un polymère fluoré isolant électrique comme le polytétrafluoroéthylène (PTFE) ou le perfluoroalkoxy (PFA), et de préférence choisi dans la liste constituée par PTFE et le PFA.

Selon l'invention, les courants de dérivation sont réduits, voire supprimés, par le système formé par la combinaison des éléments 700 et 800. Le système de réduction de courants de dérivation comporte :
- des moyens d'injection d'un gaz 700 dans les conduits d'entrée (401, 501) et de sortie (404, 504) des compartiments cathodique 310 et anodique 320 de *(n-1)* cellules électrochimiques pour former des bulles de gaz dans lesdits conduits d'entrée (401, 501) et de sortie (404, 504) ;
- un dispositif de retrait des bulles de gaz 800 disposé sur les conduits d'entrée (401, 501) des compartiments cathodique 310 et anodique 320 desdites *(n-1)* cellules électrochimiques, ce dispositif étant positionné en aval des moyens d'injection du gaz 700 et en amont des compartiments cathodiques 310 et anodiques 320, i.e. de l'entrée (310a, 320a) des compartiments cathodiques et anodiques.

Si la batterie présente deux cellules 300 tel que représentée à la figure 2, le système de réduction des courants de dérivation peut ne comporter qu'un seul ensemble moyens d'injection de gaz 700 et dispositif de retrait des bulles de gaz 800 placés sur les chemins de circulation des électrolytes d'une seule cellule afin de réduire les courants de dérivation. Cette configuration est généralisable à une batterie comportant n cellules, qui peut ne comporter des moyens d'injection d'un gaz 700 et des dispositifs de retrait des bulles de gaz 800 que relativement à *(n-1)* cellules. Sur la figure 2, les moyens d'injection de gaz et le dispositif de retrait des bulles de gaz sont prévus pour chaque cellule de la batterie.

Selon l'invention, on injecte du gaz dans les conduits d'entrée et de sortie des compartiments cathodique et anodique de manière à créer des bulles de gaz dans lesdits conduits d'entrée et de sortie. De cette manière, une discontinuité du flux liquide est créée, qui « casse » le chemin électrique dans l'électrolyte, et permet de réduire voire de faire disparaitre les courants de dérivation.

De préférence, le gaz utilisé est un gaz inerte, par exemple du diazote, afin d'éviter toute réaction avec les réactifs contenus dans l'électrolyte.

Avantageusement, les bulles de gaz ont leur dimension la plus grande qui est supérieure ou égale à 1,5 fois le diamètre des conduits d'entrée et de sortie des compartiments cathodiques et anodiques desdites *(n-1)* cellules électrochimiques, afin d'optimiser l'isolation électrique de l'électrolyte.

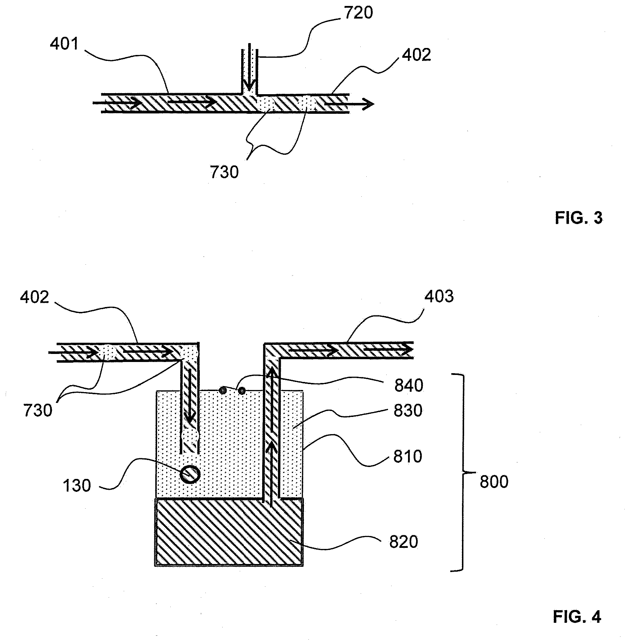

La figure 3 illustre un injecteur de gaz dans un conduit d'entrée 401 d'une cellule 300 dans lequel circule le catholyte. L'injection est réalisée de la même manière et avec les mêmes moyens dans le conduit d'entrée 501 acheminant l'anolyte à la cellule, et dans les conduits de sortie 404 et 504 des compartiments cathodiques et anodiques des cellules 300.

L'injecteur de gaz comporte un tuyau d'arrivée du gaz 720 connecté à un réservoir du gaz (non représenté), qui débouche dans le conduit d'entrée 401 du compartiment cathodique. Le gaz injecté génère des bulles 730 qui sont transportées avec le catholyte vers le compartiment cathodique au travers d'une première portion 402 du conduit d'entrée.

De préférence, les moyens d'injection du gaz comprennent au moins un ventilateur ou un compresseur de gaz relié au réservoir du gaz pour maintenir sous pression ledit réservoir.

Plus préférentiellement, les moyens d'injection du gaz comportent une unique pompe à gaz, reliée à plusieurs injecteurs tels que représentés à la figure 3, pour réaliser l'injection de gaz dans les différents conduits d'entrée et de sortie des compartiments cathodiques et anodiques des cellules.

L'arrivée du gaz peut être contrôlée par une vanne positionnée sur le tuyau d'arrivée du gaz 720, en aval du réservoir de gaz. Les moyens d'injection du gaz peuvent ainsi comprendre au moins une vanne, et de préférence autant de vannes que de tuyaux d'arrivée du gaz 720.

Alternativement, le tuyau d'arrivée du gaz a une section de passage telle que le gaz est injecté dans le conduit d'entrée 401 du compartiment cathodique par effet de Venturi.

A titre d'exemple, une simulation d'un écoulement d'électrolyte d'une batterie à flux redox a été réalisée sur le logiciel COMSOL Multiphysics® Modeling, afin de montrer l'isolation électrique obtenue par la présence de bulles de gaz dans un conduit contenant un électrolyte conducteur. La modélisation porte sur un conduit de 5 mm de diamètre et 100 mm de longueur contenant un électrolyte de conductivité ionique comparable à celle d'une batterie à flux redox classique, c'est-à-dire 10 S/m. Entre les deux extrémités du conduit, un courant de 1 A/m² est imposé. La différence de tension entre les extrémités du conduit contenant un électrolyte sans bulle de gaz est très faible, de l'ordre de 10 mV, indiquant une faible résistance, et donc la possibilité de créer un courant de dérivation important dans une batterie à flux redox. A contrario, la différence de tension entre les extrémités du conduit contenant un électrolyte comportant une bulle de diazote de 6 mm de long est égale à 816 V, impliquant une isolation électrique importante des extrémités du conduit par la bulle de gaz.

Les bulles de gaz sont éliminées avant l'entrée de l'électrolyte (le catholyte et l'anolyte) dans les compartiments cathodiques 310 et anodiques 320 des cellules 300. Ainsi, une surface d'échange maximale entre les réactifs de l'électrolyte et les électrodes est conservée. Pour cela, le dispositif de retrait des bulles de gaz 800 est positionné en aval de l'injecteur de gaz dans les conduits d'entrée (401, 501), et en amont de l'entrée (310a, 320a) des compartiments cathodiques et anodiques.

Dans la présente description, il est fait référence à des positions en amont et en aval relativement au sens de circulation d'un fluide, typiquement l'électrolyte (et éventuellement le gaz le cas échant).

Un exemple de dispositif de retrait des bulles de gaz est illustré à la figure 4. Le dispositif 800 fonctionne comme un séparateur des phases liquide (i.e. l'électrolyte) et gazeuse (le gaz injecté pour former des bulles). D'autres dispositifs de retrait des bulles que celui représenté peuvent être mis en oeuvre dans le dispositif de réduction des courants de dérivation de la batterie selon l'invention, tel qu'un purgeur similaire à un purgeur de vapeur pour séparer les condensats liquides du gaz, mais en sens inverse pour séparer le gaz ajouté du liquide.

Le dispositif de retrait des bulles de gaz 800 comporte une enceinte hermétique 810 comprenant :
- une phase liquide dans une partie inférieure 820 de l'enceinte 810, ladite phase liquide comportant du catholyte ou de l'anolyte, selon que le dispositif se trouve sur la ligne d'arrivée de l'électrolyte du compartiment cathodique ou anodique ;
- une phase gazeuse dans une partie supérieure 830 de l'enceinte 810, ladite phase gazeuse comportant du gaz de même nature que le gaz injecté pour former les bulles ;
- une sortie 840 pour le gaz, de préférence une soupape, positionnée au sommet de la partie supérieure 830 de l'enceinte 810.

La première portion 402 du conduit d'entrée dans laquelle circule l'anolyte ou le catholyte additionné du gaz s'ouvre dans la partie supérieure 830 de l'enceinte 810, et une seconde portion 403 du conduit d'entrée dans laquelle circule l'anolyte ou le catholyte ôté du gaz s'ouvre dans la partie inférieure 820 de l'enceinte 810.

La première portion 402 du conduit d'entrée est située en aval des moyens d'injection du gaz 700 dans les conduits d'entrée 401 des compartiments cathodique 310 ou anodique 320 des *(n-1)* cellules électrochimique.

La deuxième portion 403 du conduit d'entrée est située en aval du dispositif de retrait du gaz 800 et en amont des compartiments cathodique 310 ou anodique 320 des *(n-1)* cellules électrochimiques.

Les conduits d'entrée (401, 501) des compartiments cathodique et anodique des cellules sont ainsi interrompus, et formés par la première portion 402 qui s'ouvre dans la partie supérieure de l'enceinte du dispositif 800, et par la deuxième portion 403 qui puise l'électrolyte dans le fond 820 de l'enceinte du dispositif 800, pour déboucher dans l'entrée du compartiment cathodique 310 ou anodique 320 de la cellule 300.

L'électrolyte contenant les bulles de gaz se déverse dans la partie supérieure 830 de l'enceinte 810 contenant du gaz. Le gaz des bulles est ainsi libéré dans la phase gazeuse de l'enceinte 810, et l'électrolyte liquide s'écoule et s'accumule dans la partie inférieure 820 de l'enceinte. Une garde de liquide est présente dans cette partie inférieure de l'enceinte, notamment de manière à éviter tout entrainement du gaz non désiré avec le liquide en sortie du dispositif 800. La deuxième portion 403 du conduit d'entrée est ouverte dans la partie inférieure 820 de l'enceinte contenant de l'électrolyte, d'où l'électrolyte est pompé pour être acheminé, sans bulles de gaz, jusqu'au compartiment cathodique 310 ou anodique 320 de la cellule 300. La différence de pression générée par les pompes des électrolytes 610 et 620 peut fournir l'énergie nécessaire au déplacement à cette aspiration du liquide dans le dispositif 800.

La phase gazeuse est évacuée par la soupape 840, qui peut être pilotée par un dispositif de pilotage extérieur, ou qui peut être pilotée mécaniquement par un dispositif de pilotage interne à l'enceinte, par exemple par le biais d'un flotteur.

Si le débit est faible, l'électrolyte s'écoule en goutte à goutte, tel que montré sur la figure 4 où une goutte d'électrolyte 130 est représentée, créant une isolation électrique supplémentaire dans l'électrolyte.

Dans la batterie selon l'invention, les catholyte et anolyte contenant des bulles de gaz en sortie des compartiments cathodique et anodiques des cellules sont renvoyées dans les réservoirs respectifs 110 et 120 dans lesquels est effectuée la séparation du gaz et du liquide.

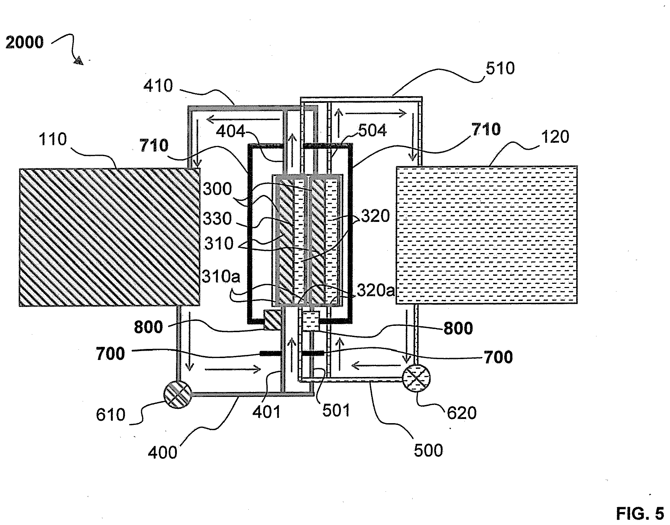

La figure 5 illustre un système de stockage et de restitution d'énergie électrochimique à flux redox 2000 selon un deuxième mode de réalisation de l'invention.

Le système 2000 et son fonctionnement sont en tout point identiques au système 1000, à l'exception du système de réduction de courants de dérivation, en particulier du dispositif de retrait des bulles de gaz 800 et des moyens d'injection du gaz dans les conduits de sortie des compartiments cathodique et anodique de *(n-1)* cellules électrochimiques.

Dans la batterie 2000, les moyens d'injection du gaz comportent un circuit de recyclage 710 du gaz retiré par le dispositif de retrait des bulles de gaz 800, le gaz étant réinjecté dans les conduites de sortie 404 et 504 des compartiments cathodique 310 ou anodique 320 des *(n-1)* cellules électrochimiques 300. Selon ce mode de réalisation, le circuit de recyclage 710 est relié à la sortie 840 du gaz de l'enceinte 810 du dispositif 800, et à un tuyau d'arrivée 720 du gaz dans le conduit de sortie 404 ou 504.

Le circuit de recyclage peut comprendre des moyens de circulation forcée de gaz, par exemple une pompe à gaz. L'arrivée du gaz peut être contrôlée par une vanne positionnée sur le tuyau d'arrivée du gaz 720, ou peut être laissée libre, la quantité de gaz introduite étant la même que celle retirée par la sortie 840. Alternativement, le tuyau d'arrivée du gaz a une section de passage telle que le gaz est injecté dans le conduit de sortie (404, 504) du compartiment cathodique 310 ou anodique 320 par effet de Venturi, notamment lorsque le débit de liquide est être suffisant pour permettre un tel effet.

## Revendications

1. Système de stockage et de restitution d'énergie électrochimique à flux redox (1000, 2000), comportant :
- *n* cellules électrochimiques (300) connectées électriquement en série, n étant un entier supérieur ou égal à 2,
chaque cellule (300) comportant une enceinte formée par un compartiment cathodique (310) contenant un catholyte et un compartiment anodique (320) contenant un anolyte, lesdits compartiments cathodique (310) et anodique (320) étant séparés par un séparateur (330) isolant électrique et perméable aux ions contenus dans le catholyte et l'anolyte, et lesdits compartiments cathodique (310) et anodique (320) comportant chacun un conduit d'entrée (401, 501) et un conduit de sortie (404, 504) pour la circulation respectivement du catholyte et de l'anolyte dans lesdits compartiments (310, 320) ;
- un premier réservoir (110) de stockage pour le catholyte ;
- un deuxième réservoir (120) de stockage pour l'anolyte ;
- des moyens de communication fluidique entre le premier réservoir (110) et le compartiment cathodique (310) de chaque cellule électrochimique (300) et entre le deuxième réservoir (120) et le compartiment anodique (320) de chaque cellule électrochimique (300), tels que les cellules électrochimiques (300) sont reliées fluidiquement en parallèle ;
- un système de réduction de courants de dérivation (700, 710, 800) comportant :
-- des moyens d'injection d'un gaz (700) dans les conduits d'entrée (401, 501) et de sortie (404, 504) des compartiments cathodique (310) et anodique (320) de *(n-1)* cellules électrochimiques (300) pour former des bulles de gaz dans lesdits conduits d'entrée et de sortie ;
-- un dispositif de retrait des bulles de gaz (800) disposé sur les conduits d'entrée (401, 501) des compartiments cathodique (310) et anodique (320) desdites *(n-1)* cellules électrochimiques (300), ledit dispositif (800) étant positionné en aval des moyens d'injection du gaz (700) et en amont des compartiments cathodiques (310) et anodiques (320).

2. Système selon la revendication 1, dans lequel le gaz est inerte, et est de préférence du diazote.

3. Système selon l'une des revendications précédentes, dans lequel les bulles de gaz ont leur dimension la plus grande supérieure ou égale à 1,5 fois le diamètre des conduits d'entrée (401, 501) et de sortie (404, 504) des compartiments cathodiques (310) et anodiques (320) desdites *(n-1)* cellules électrochimiques (300).

4. Système selon l'une des revendications précédentes, dans lequel les moyens d'injection du gaz (700) comprennent, pour chaque conduit d'entrée (401, 501) et conduit de sortie (404, 504) des compartiments cathodiques (310) et anodiques (320) des *(n-1)* cellules électrochimiques, un tuyau d'arrivée du gaz (720) connecté à un réservoir du gaz, ledit tuyau (720) débouchant dans ledit conduit d'entrée (401, 501) ou conduit de sortie (404, 504) des compartiments cathodiques (310) et anodiques (320).

5. Système selon la revendication 4, dans lequel les moyens d'injection du gaz (700) comprennent au moins un ventilateur ou un compresseur de gaz relié audit réservoir du gaz pour le maintenir sous pression.

6. Système selon l'une des revendications 4 et 5, dans lequel les moyens d'injection du gaz (700) comportent au moins une vanne positionnée sur ledit tuyau d'arrivée du gaz (720), en aval du réservoir de gaz.

7. Système selon l'une des revendications 4 et 5, dans le tuyau d'arrivée du gaz (720) a une section de passage telle que le gaz est injecté dans les conduits d'entrée (401, 501) ou conduit de sortie (404, 504) des compartiments cathodiques (310) et anodiques (320) par effet de Venturi.

8. Système selon l'une des revendications précédentes, dans lequel le dispositif de retrait des bulles de gaz (800) comporte une enceinte hermétique (810) comprenant :
- une phase liquide dans une partie inférieure (820) de l'enceinte (810), ladite phase liquide comportant de l'anolyte ou du catholyte ;
- une phase gazeuse dans une partie supérieure (830) de l'enceinte (810), ladite phase gazeuse comportant du gaz de même nature que le gaz injecté pour former les bulles ;
- une sortie (840) pour le gaz, de préférence une soupape, positionnée au sommet de la partie supérieure (830) de l'enceinte (810);
une première portion (402) du conduit d'entrée (401, 501) dans laquelle circule le catholyte ou l'anolyte additionné du gaz s'ouvrant dans la partie supérieure (830) de l'enceinte (810), et
une seconde portion (403) du conduit d'entrée (401, 501) dans laquelle circule le catholyte ou l'anolyte ôté du gaz s'ouvrant dans la partie inférieure (820) de l'enceinte (810),
ladite première portion (402) du conduit d'entrée étant située en aval des moyens d'injection du gaz (700) dans les conduits d'entrée (401, 501) des compartiments cathodique (310) ou anodique (320) des *(n-1)* cellules électrochimiques (300) et ladite deuxième portion (403) du conduit d'entrée (401, 501) étant située en aval du dispositif de retrait du gaz (800) et en amont des compartiments cathodique ou anodique des *(n-1)* cellules électrochimiques.

9. Système selon l'une des revendications précédentes, dans lequel les moyens d'injection d'un gaz (700) comportent un circuit de recyclage du gaz (710) retiré par le dispositif de retrait des bulles de gaz (800) dans les conduites de sortie (404, 504) des compartiments cathodique (310) ou anodique des *(n-1)* cellules électrochimiques (300).

10. Système selon l'une des revendications précédentes, dans lequel les moyens de communication fluidique comportent :
- une première conduite principale d'entrée (400) et une première conduite principale de sortie (410) reliant le premier réservoir (110) aux compartiments cathodiques (310) des *n* cellules électrochimiques (300),
la première conduite principale d'entrée (400) étant configurée de manière à distribuer le catholyte dans les conduits d'entrée (401) des compartiments cathodiques (310) au moyen d'une première pompe (610) et la première conduite principale de sortie (410) étant configurée de manière à collecter le catholyte issu des conduits de sortie (404) des compartiments cathodiques (310) ;
- une deuxième conduite principale d'entrée (500) et une deuxième conduite principale de sortie (510) reliant le deuxième réservoir (120) aux compartiments anodiques (320) des *n* cellules électrochimiques (300),
la deuxième conduite principale d'entrée (500) étant configurée de manière à distribuer l'anolyte dans les conduits d'entrée (501) des compartiments anodiques (320) au moyen d'une deuxième pompe (620) et la deuxième conduite principale de sortie (510) étant configurée de manière à collecter l'anolyte issu des conduits de sortie (504) des compartiments anodiques (320) des *n* cellules électrochimiques (300).

11. Système selon la revendication 10, dans lequel les conduits d'entrée (401, 501) et de sortie (404, 504) des compartiments cathodique (310) et anodiques (320) des *n* cellules électrochimiques, et les premières et deuxièmes conduites principales d'entrée et de sortie (400, 500, 410, 510) sont isolants électriquement.

12. Système selon la revendication 11, dans lequel les conduits d'entrée (401, 501) et de sortie (404, 504) des compartiments cathodique (310) et anodiques (320) des *n* cellules électrochimiques (300), et les premières et deuxièmes conduites principales d'entrée (400, 500) et de sortie (410, 510), sont constitués d'un ou plusieurs matériaux isolants électriquement, de préférence choisis parmi les polymères thermoplastiques isolants électriques, de préférence choisis dans la liste constituée par le PVC, le polyéthylène, le polypropylène.

13. Système selon la revendication 11, dans lequel les conduits d'entrée (401, 501) et de sortie (404, 504) des compartiments cathodiques (310) et anodiques (320) des *n* cellules électrochimiques (300), et les premières et deuxièmes conduites principales d'entrée (400, 500) et de sortie (410, 510), comportent un corps constitué d'un ou plusieurs matériaux conducteurs électriquement, et comportent un revêtement interne destiné à être en contact avec le catholyte ou l'anolyte, isolant électriquement, ledit revêtement interne étant de préférence constitué d'un matériau isolant électriquement choisi parmi les polymères fluorés isolants électriques, plus préférentiellement choisi dans la liste constituée par le PTFE et le PFA.

14. Procédé de réduction des courants de dérivation dans un système de stockage et de restitution d'énergie électrochimique à flux redox selon l'une des revendications 1 à 13, comportant les étapes suivantes :
- on envoie un catholyte et un anolyte dans respectivement des compartiments cathodiques (310) et anodiques (320) de *n* cellules électrochimiques (300) connectées électriquement en série, *n* étant un entier supérieur ou égal à 2, et reliées fluidiquement en parallèle, par pompage desdits catholyte et anolyte depuis respectivement un premier réservoir (110) et un deuxième réservoir (120);
- on injecte du gaz dans des conduits d'entrée (401, 501) du catholyte et de l'anolyte des compartiments cathodique (310) et anodique (320) de *(n-1)* cellules électrochimiques (300) pour former des bulles de gaz dans lesdits conduits d'entrée (401, 501);
- on retire les bulles de gaz du catholyte et de l'anolyte avant leur entrée dans les compartiments cathodique (310) et anodique (320) desdites *(n-1)* cellules électrochimiques (300) ;
- on injecte du gaz dans des conduits de sortie (404, 504) du catholyte et de l'anolyte des compartiments cathodique (310) et anodique (320) de *(n-1)* cellules électrochimiques (300) pour former des bulles de gaz dans lesdits conduits de sortie (404, 504) ;
- on renvoie le catholyte et l'anolyte contenant des bulles de gaz respectivement dans premier réservoir (110) et le deuxième réservoir (120), le gaz étant séparé du catholyte et de l'anolyte au sein desdits premier et deuxième réservoirs (110, 120).

## Patentansprüche

1. System zur Speicherung und Abgabe elektrochemischer Energie mit Redox-Fluss (1000, 2000), aufweisend:
- *n* elektrochemische Zellen (300), die elektrisch in Reihe geschaltet sind, wobei *n* eine Ganzzahl größer oder gleich 2 ist,
jede Zelle (300) aufweisend eine Einfassung, die von einer kathodischen Kammer (310), die einen Katholyten enthält, und einer anodischen Kammer (320), die einen Anolyten enthält, gebildet ist, wobei die kathodischen (310) und die anodischen (320) Kammern durch einen Separator (330) getrennt sind, der elektrisch isolierend und für die Ionen durchlässig ist, die in dem Katholyten und dem Anolyten enthalten sind, und die kathodischen (310) und die anodischen (320) Kammern jeweils eine Einlassleitung (401, 501) und eine Auslassleitung (404, 504) für die Zirkulation des Katholyten bzw. des Anolyten in den Kammern (310, 320) aufweisen;
- einen ersten Speicherbehälter (110) für den Katholyten;
- einen zweiten Speicherbehälter (120) für den Anolyten;
- Fluidverbindungsmittel zwischen dem ersten Speicherbehälter (110) und der kathodischen Kammer (310) jeder elektrochemischen Zelle (300) und zwischen dem zweiten Behälter (120) und der anodischen Kammer (320) jeder elektrochemischen Zelle (300), so dass die elektrochemischen Zellen (300) parallel in Fluidverbindung stehen;
- ein System zur Minderung von Bypassströmen (700, 710, 800) aufweisend:
-- Mittel zur Einspritzung eines Gases (700) in die Einlass- (401, 501) und Auslassleitungen (404, 504) der kathodischen (310) und der anodischen (320) Kammern von (*n*-1) elektrochemischen Zellen (300), um Gasblasen in den Einlass- und Auslassleitungen zu bilden;
-- eine Vorrichtung zur Entnahme der Gasblasen (800), die auf den Einlassleitungen (401, 501) der kathodischen (310) und der anodischen (320) Kammern der (*n*-1) elektrochemischen Zellen (300) angeordnet ist, wobei die Vorrichtung (800) stromab der Mittel zur Einspritzung des Gases (700) und stromauf der kathodischen (310) und der anodischen (320) Kammern positioniert ist.

2. System nach Anspruch 1, wobei das Gas inert und vorzugsweise Distickstoff ist.

3. System nach einem der vorhergehenden Ansprüche, wobei die Gasblasen ihre größte Abmessung größer als oder gleich dem 1,5-fachen des Durchmessers der Einlass- (401, 501) und Auslassleitungen (404, 504) der kathodischen (310) und der anodischen (320) Kammern der (*n*-1) elektrochemischen Zellen (300) aufweisen.

4. System nach einem der vorhergehenden Ansprüche, wobei die Mittel zur Einspritzung des Gases (700) für jede Einlassleitung (401, 501) und Auslassleitung (404, 504) der kathodischen (310) und der anodischen (320) Kammern der (*n*-1) elektrochemischen Zellen ein Zuleitungsrohr des Gases (720) umfassen, das mit einem Behälter des Gases verbunden ist, wobei das Rohr (720) in die Einlassleitung (401, 501) oder Auslassleitung (404, 504) der kathodischen (310) und der anodischen (320) Kammern mündet.

5. System nach Anspruch 4, wobei die Mittel zur Einspritzung des Gases (700) mindestens einen Ventilator oder einen Gaskompressor umfassen, der mit dem Behälter des Gases verbunden ist, um ihn unter Druck zu halten.

6. System nach einem der Ansprüche 4 und 5, wobei die Mittel zur Einspritzung des Gases (700) mindestens ein Ventil aufweisen, das auf dem Zuleitungsrohr des Gases (720) stromab des Gasbehälters positioniert ist.

7. System nach einem der Ansprüche 4 und 5, wobei das Zuleitungsrohr des Gases (720) einen derartigen Durchgangsquerschnitt aufweist, dass das Gas durch den Venturi-Effekt in die Einlass- (401, 501) oder Auslassleitungen (404, 504) der kathodischen (310) und der anodischen (320) Kammern eingespritzt wird.

8. System nach einem der vorhergehenden Ansprüche, wobei die Vorrichtung zur Entnahme der Gasblasen (800) eine hermetische Einfassung (810) aufweist, umfassend:
- eine flüssige Phase in einem unteren Teil (820) der Einfassung (810), wobei die flüssige Phase Anolyt oder Katholyt aufweist;
- eine gasförmige Phase in einem oberen Teil (830) der Einfassung (810), wobei die gasförmige Phase Gas derselben Art wie das Gas aufweist, das eingespritzt wird, um die Blasen zu bilden;
- einen Auslass (840) für das Gas, vorzugsweise ein Ventil, das am Scheitel des oberen Teils (830) der Einfassung (810) positioniert ist;
einen ersten Abschnitt (402) der Einlassleitung (401, 501), in welchem der Katholyt oder der Anolyt zirkuliert, der mit dem Gas versetzt ist, der in den oberen Teil (830) der Einfassung (810) mündet,
und
einen zweiten Abschnitt (403) der Einlassleitung (401, 501), in welchem der Katholyt oder der Anolyt zirkuliert, aus dem das Gas entfernt ist, der in den unteren Teil (820) der Einfassung (810) mündet, wobei sich der erste Abschnitt (402) der Einlassleitung stromab der Mittel zur Einspritzung des Gases (700) in den Einlassleitungen (401, 501) der kathodischen (310) oder der anodischen (320) Kammern der (n-1) elektrochemischen Zellen (300) und sich der zweite Abschnitt (403) der Einlassleitung (401, 501) stromab der Vorrichtung zur Entnahme des Gases (800) und stromauf der kathodischen oder der anodischen Kammern der (n-1) elektrochemischen Zellen befindet.

9. System nach einem der vorhergehenden Ansprüche, wobei die Mittel zur Einspritzung eines Gases (700) einen Kreislauf zur Rückführung des Gases (710), das durch die Vorrichtung zur Entnahme der Gasblasen (800) entnommen wurde, in die Auslassleitungen (404, 504) der kathodischen (310) oder der anodischen Kammern der (*n*-1) elektrochemischen Zellen (300) aufweisen.

10. System nach einem der vorhergehenden Ansprüche, wobei die Fluidverbindungsmittel Folgendes aufweisen:
- eine erste Einlass-Hauptleitung (400) und eine erste Auslass-Hauptleitung (410), die den ersten Behälter (110) mit den kathodischen Kammern (310) der *n* elektrochemischen Zellen (300) verbinden,
wobei die erste Einlass-Hauptleitung (400) dazu ausgebildet ist, den Katholyten mittels einer ersten Pumpe (610) in die Einlassleitungen (401) der kathodischen Kammern (310) abzugeben, und die erste Auslass-Hauptleitung (410) dazu ausgebildet ist, den Katholyten aus den Auslassleitungen (404) der kathodischen Kammern (310) zu sammeln;
- eine zweite Einlass-Hauptleitung (500) und eine zweite Auslass-Hauptleitung (510), die den zweiten Behälter (120) mit den anodischen Kammern (320) der *n* elektrochemischen Zellen (300) verbinden,
wobei die zweite Einlass-Hauptleitung (500) dazu ausgebildet ist, den Anolyten mittels einer zweiten Pumpe (620) in die Einlassleitungen (501) der anodischen Kammern (320) abzugeben, und die zweite Auslass-Hauptleitung (510) dazu ausgebildet ist, den Anolyten aus den Auslassleitungen (504) der anodischen Kammern (320) der *n* elektrochemischen Zellen (300) zu sammeln.

11. System nach Anspruch 10, wobei die Einlass- (401, 501) und Auslassleitungen (404, 504) der kathodischen (310) und anodischen (320) Kammern der *n* elektrochemischen Zellen und die erste und zweite Einlass- und Auslass-Hauptleitung (400, 500, 410, 510) elektrisch isolierend sind.

12. System nach Anspruch 11, wobei die Einlass- (401, 501) und Auslassleitungen (404, 504) der kathodischen (310) und anodischen (320) Kammern der *n* elektrochemischen Zellen (300) und die ersten und zweiten Einlass- (400, 500) und Auslass-Hauptleitungen (410, 510) von einem oder mehreren elektrisch isolierenden Materialien gebildet sind, vorzugsweise aus elektrisch isolierenden thermoplastischen Polymeren ausgewählt sind, vorzugsweise aus der Liste ausgewählt sind, die aus PVC, Polyethylen, Polypropylen gebildet ist.

13. System nach Anspruch 11, wobei die Einlass- (401, 501) und Auslassleitungen (404, 504) der kathodischen (310) und anodischen (320) Kammern der *n* elektrochemischen Zellen (300) und die ersten und zweiten Einlass- (400, 500) und Auslass-Hauptleitungen (410, 510) einen Körper aufweisen, der von einem oder mehreren elektrisch leitenden Materialien gebildet ist, und eine Innenbeschichtung aufweisen, die dazu bestimmt ist, mit dem Katholyten oder dem Anolyten in Kontakt zu stehen, die elektrisch isolierend ist, wobei die Innenbeschichtung vorzugsweise von einem elektrisch isolierenden Material gebildet ist, das aus den elektrisch isolierenden Fluorpolymeren ausgewählt ist, besser noch aus der Liste, die von PTFE und PFA gebildet ist.

14. Verfahren zur Minderung der Bypassströme in einem System zur Speicherung und Abgabe elektrochemischer Energie mit Redox-Fluss nach einem der Ansprüche 1 bis 13, aufweisend die folgenden Schritte:
- Senden eines Katholyten und eines Anolyten in kathodische (310) bzw. anodische (320) Kammern von *n* elektrochemischen Zellen (300), die elektrisch in Reihe geschaltet sind, wobei *n* eine Ganzzahl größer oder gleich 2 ist, und parallel in Fluidverbindung stehen, durch Pumpen des Katholyts und Anolyts aus einem ersten Behälter (110) bzw. zweiten Behälter (120);
- Einspritzen von Gas in Einlassleitungen (401, 501) des Katholyten und des Anolyten der kathodischen (310) und anodischen (320) Kammern von (*n*-1) elektrochemischen Zellen (300), um Gasblasen in den Einlassleitungen (401, 501) zu bilden;
- Entnehmen der Gasblasen aus dem Katholyten und dem Anolyten vor ihrem Eintritt in die kathodischen (310) und anodischen (320) Kammern der (*n*-1) elektrochemischen Zellen (300);
- Einspritzen von Gas in Auslassleitungen (404, 504) des Katholyten und des Anolyten der kathodischen (310) und anodischen (320) Kammern von (n-1) elektrochemischen Zellen (300), um Gasblasen in den Auslassleitungen (404, 504) zu bilden;
- Zurücksenden des Katholyten und des Anolyten, die Gasblasen enthalten, in den ersten Behälter (110) bzw. zweiten Behälter (120), wobei das Gas innerhalb des ersten und zweiten Behälters (110, 120) von dem Katholyten und dem Anolyten getrennt wird.

## Claims

1. A redox flow system for storing and releasing electrochemical energy (1000, 2000), comprising:
- *n* electrochemical cells (300) electrically connected in series, *n* being an integer greater than or equal to 2,
each cell (300) comprising a chamber formed by a cathode compartment (310) containing a catholyte and an anode compartment (320) containing an anolyte, said cathode (310) and anode (320) compartments being separated by a separator (330) that is electrically insulating and permeable to the ions contained in the catholyte and the anolyte, and said cathode (310) and anode (320) compartments each comprising an inlet duct (401, 501) and an outlet duct (404, 504) for the circulation respectively of the catholyte and of the anolyte in said compartments (310, 320);
- a first storage tank (110) for the catholyte;
- a second storage tank (120) for the anolyte;
- means for fluid communication between the first tank (110) and the cathode compartment (310) of each electrochemical cell (300) and between the second tank (120) and the anode compartment (320) of each electrochemical cell (300), such that the electrochemical cells (300) are fluidically connected in parallel;
- a system for reducing shunt currents (700, 710, 800) comprising:
-- means (700) for injecting a gas into the inlet (401, 501) and outlet (404, 504) ducts of the cathode (310) and anode (320) compartments of *(n-1)* electrochemical cells (300) in order to form gas bubbles in said inlet and outlet ducts;
-- a device (800) for removing the gas bubbles which is positioned on the inlet ducts (401, 501) of the cathode (310) and anode (320) compartments of said *(n-1)* electrochemical cells (300), said device (800) being positioned downstream of the means (700) for injecting the gas and upstream of the cathode (310) and anode (320) compartments.

2. The system as claimed in claim 1, wherein the gas is inert, and is preferably dinitrogen.

3. The system as claimed in either of the preceding claims, wherein the largest dimension of the gas bubbles is greater than or equal to 1.5 times the diameter of the inlet (401, 501) and outlet (404, 504) ducts of the cathode (310) and anode (320) compartments of said *(n-1)* electrochemical cells (300).

4. The system as claimed in one of the preceding claims, wherein the means (700) for injecting the gas comprise, for each inlet duct (401, 501) and outlet duct (404, 504) of the cathode (310) and anode (320) compartments of the *(n-1)* electrochemical cells, a gas supply pipe (720) connected to a tank of the gas, said pipe (720) opening into said inlet duct (401, 501) or outlet duct (404, 504) of the cathode (310) and anode (320) compartments.

5. The system as claimed in claim 4, wherein the means (700) for injecting the gas comprise at least one fan or a gas compressor connected to said tank of the gas in order to keep it under pressure.

6. The system as claimed in either of claims 4 and 5, wherein the means (700) for injecting the gas comprise at least one valve positioned on said gas supply pipe (720), downstream of the gas tank.

7. The system as claimed in either of claims 4 and 5, wherein the gas supply pipe (720) has a flow area such that the gas is injected into the inlet ducts (401, 501) or outlet ducts (404, 504) of the cathode (310) and anode (320) compartments by the Venturi effect.

8. The system as claimed in one of the preceding claims, wherein the device (800) for removing the gas bubbles comprises a hermetic chamber (810) comprising:
- a liquid phase in a lower part (820) of the chamber (810), said liquid phase comprising anolyte or catholyte;
- a gas phase in an upper part (830) of the chamber (810), said gas phase comprising gas of the same type as the gas injected to form the bubbles;
- an outlet (840) for the gas, preferably a relief valve, positioned at the top of the upper part (830) of the chamber (810);
a first portion (402) of the inlet duct (401, 501), in which the catholyte or anolyte with the gas added flows, opening into the upper part (830) of the chamber (810),
and
a second portion (403) of the inlet duct (401, 501), in which the catholyte or anolyte with the gas removed flows, opening into the lower part (820) of the chamber (810),
said first portion (402) of the inlet duct being located downstream of the means (700) for injecting the gas into the inlet ducts (401, 501) of the cathode (310) or anode (320) compartments of the *(n-1)* electrochemical cells (300) and said second portion (403) of the inlet duct (401, 501) being located downstream of the device (800) for removing the gas and upstream of the cathode or anode compartments of the *(n-1)* electrochemical cells.

9. The system as claimed in one of the preceding claims, wherein the means (700) for injecting a gas comprise a circuit (710) for recycling the gas, removed by the device (800) for removing the gas bubbles, to the outlet ducts (404, 504) of the cathode (310) or anode (320) compartments of the *(n-1)* electrochemical cells (300).

10. The system as claimed in one of the preceding claims, wherein the means for fluid communication comprise:
- a first main inlet duct (400) and a first main outlet duct (410) connecting the first tank (110) to the cathode compartments (310) of the n electrochemical cells (300),
the first main inlet duct (400) being configured so as to distribute the catholyte into the inlet ducts (401) of the cathode compartments (310) by means of a first pump (610) and the first main outlet duct (410) being configured so as to collect the catholyte from the outlet ducts (404) of the cathode compartments (310);
- a second main inlet duct (500) and a second main outlet duct (510) connecting the second tank (120) to the anode compartments (320) of the *n* electrochemical cells (300),
the second main inlet duct (500) being configured so as to distribute the anolyte into the inlet ducts (501) of the anode compartments (320) by means of a second pump (620) and the second main outlet duct (510) being configured so as to collect the anolyte from the outlet ducts (504) of the anode compartments (320) of the *n* electrochemical cells (300).

11. The system as claimed in claim 10, wherein the inlet (401, 501) and outlet (404, 504) ducts of the cathode (310) and anode (320) compartments of the n electrochemical cells, and the first and second main inlet and outlet ducts (400, 500, 410, 510) are electrically insulating.

12. The system as claimed in claim 11, wherein the inlet (401, 501) and outlet (404, 504) ducts of the cathode (310) and anode (320) compartments of the *n* electrochemical cells (300), and the first and second main inlet (400, 500) and outlet (410, 510) ducts, consist of one or more electrically insulating materials, preferably selected from electrically insulating thermoplastic polymers, preferably selected from the list consisting of PVC, polyethylene and polypropylene.

13. The system as claimed in claim 11, wherein the inlet (401, 501) and outlet (404, 504) ducts of the cathode (310) and anode (320) compartments of the n electrochemical cells (300), and the first and second main inlet (400, 500) and outlet (410, 510) ducts, have a body consisting of one or more electrically conductive materials, and have an electrically insulating internal coating intended to be in contact with the catholyte or the anolyte, said internal coating preferably consisting of an electrically insulating material selected from electrically insulating fluoropolymers, more preferentially selected from the list consisting of PTFE and PFA.

14. A process for reducing shunt currents in a redox flow system for storing and releasing electrochemical energy as claimed in one of claims 1 to 13, comprising the following steps:
- a catholyte and an anolyte are sent respectively into cathode (310) and anode (320) compartments of *n* electrochemical cells (300) electrically connected in series, *n* being an integer greater than or equal to 2, and fluidically connected in parallel, by pumping said catholyte and anolyte respectively from a first tank (110) and a second tank (120);
- gas is injected into the catholyte and anolyte inlet ducts (401, 501) of the cathode (310) and anode (320) compartments of *(n-1)* electrochemical cells (300) in order to form gas bubbles in said inlet ducts (401, 501);
- the gas bubbles are removed from the catholyte and anolyte before they enter the cathode (310) and anode (320) compartments of *(n-1)* electrochemical cells (300);
- gas is injected into the catholyte and anolyte outlet ducts (404, 504) of the cathode (310) and anode (320) compartments of *(n-1)* electrochemical cells (300) in order to form gas bubbles in said outlet ducts (404, 504);
- the catholyte and the anolyte containing gas bubbles are sent back respectively to the first tank (110) and the second tank (120), the gas being separated from the catholyte and from the anolyte within said first and second tanks (110, 120).
